# EUROPEAN PATENT APPLICATION

(11) **EP 4 454 837 A1**
(43) Date of publication of application: **30.10.2024**
(21) Application number: 22910534.1
(22) Date of filing: 17.10.2022
(51) Int. Cl.: B25J 15/12, B25J 15/00, B25J 15/08, B25J 15/10, B25J 19/00, F15B 15/10

(54) **GRIPPING DEVICE**

(30) Priority: 20.12.2021 JP 2021206027
(71) Applicant: BRIDGESTONE CORPORATION, Chuo-ku Tokyo 104-8340 (JP)
(72) Inventor: YASUI Hitoshi, Chuo-ku, Tokyo (JP); FUJITA Shungo, Chuo-ku, Tokyo (JP); ITOI Dyta, Chuo-ku, Tokyo (JP)
(74) Representative: Marks & Clerk LLP
(86) International application number: PCT/JP2022/038505
(87) International publication number: WO 2023/119808

(57) **Abstract**

A fluid pressure actuator used as the grasping device 1 includes a cylindrical tube that expands and contracts under the pressure of a fluid, and a sleeve having a stretchable structure in which fiber cords oriented in a predetermined direction are woven and that covers an outer peripheral surface of the tube. A tip portion of the fluid pressure actuator 10 is provided with a spoon-shape housing portion 50, and a partition plate 30 that closes an opening surface 50a of the housing portion 50 when the fluid pressure actuator 10 is non-curved or curved.

## Description

### [Technical Field]

The present disclosure relates to a grasping device using a fluid pressure actuator that curves (curls) during contraction.

### [Background Art]

Conventionally, a structure (so-called McKibben type) having a rubber tube that expands and contracts by air pressure and a sleeve that covers the outer peripheral surface of the tube has been widely used as a fluid pressure actuator that expands and contracts the tube using a gas or liquid.

Such a McKibben type fluid pressure actuator also has a known structure that curves (curls) during contraction (see Patent Literature 1). Specifically, Patent Literature 1 discloses a grasping device for grasping an object (which may be called a workpiece) by using a plurality of such fluid pressure actuators.

### [Citation List]

### [Patent Literature]

[Patent Literature 1]
Japanese Patent Laid-Open No. 2021-088999

### [Summary of Invention]

However, the above-described grasping device using a fluid pressure actuator has the following problems. Specifically, it is difficult to grasp an appropriate amount of an object at one time, and the amount of an object that can be grasped becomes large or small.

Therefore, the following disclosure is made in view of such a situation, and it is an object to provide a grasping device that can grasp an appropriate amount of an object at each time while using a fluid pressure actuator that curves (curls) during contraction.

An embodiment of the present disclosure is a grasping device (For example, grasping device 1) using a plurality of fluid pressure actuators (fluid pressure actuator 10) that are curved during contraction. The fluid pressure actuators include a tube (tube 110) that is cylindrical, and expands and contracts under fluid pressure, and a sleeve (sleeve 120) having a stretchable structure in which fiber cords oriented in a predetermined direction are woven and that covers an outer peripheral surface of the tube. A spoon-shaped housing portion (housing portion 50) is provided at a tip portion (tip portion 300) of each of the fluid pressure actuators, and a partition plate (partition plate 30) is provided to close an opening surface (opening surface 50a) of the housing portion when the fluid pressure actuator is non-curved or curved.

### [Effect of the Invention]

According to the grasping device described above, an appropriate amount of an object can be grasped each time while using a fluid pressure actuator that curves (curls) during contraction.

### [Brief Description of Drawings]

[FIG. 1] FIG. 1 (a), (b) and (c) are perspective views of the grasping device 1 according to the present embodiment.
[FIG. 2] FIG. 2 (a) to (d) are side views and bottom views of the grasping device 1.
[FIG. 3] FIG. 3 is a side view of a fluid pressure actuator 10.
[FIG. 4] FIG. 4 is a cross-sectional view of an actuator body portion 100 along a radial direction D_{R}.
[FIG. 5] FIG. 5 is an explanatory view of the behavior of the fluid pressure actuator 10.
[FIG. 6] FIGS. 6 (a), (b) and 6 (c) are views showing an operation example of the grasping device 1.
[FIG. 7] FIGS. 7 (a), (b) and (c) are perspective views of the grasping device 1A related to modified example.
[FIG. 8] FIGS. 8 (a) to (d) are side views and bottom views of the grasping device 1A.

### [Description of Embodiments]

Hereinafter, the embodiment will be described based on the drawings. The same functions and structures are denoted by the same or similar reference numerals, and the description thereof will be omitted accordingly.

### (1) Overall general configuration of grasping device

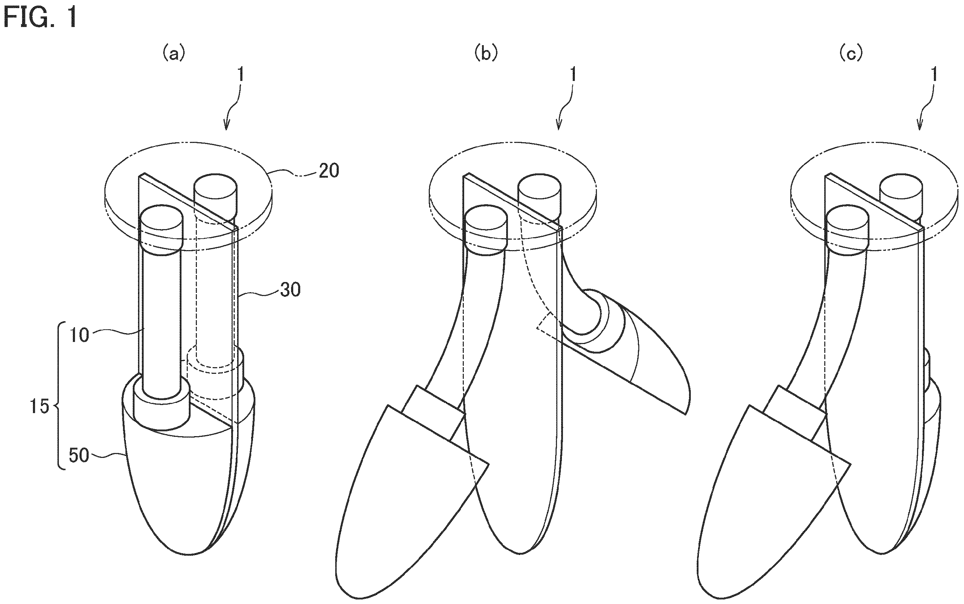

FIGS. 1 (a), 1 (b) and 1 (c) are perspective views of the grasping device 1 according to the present embodiment. Specifically, FIG. 1 (a) is a perspective view of the grasping device 1 when the fluid pressure actuator 10 is non-curved. FIG. 1 (b) is a perspective view of the grasping device 1 when the fluid pressure actuator 10 is curved. FIG. 1 (c) is a perspective view of the grasping device 1 when one of the fluid pressure actuators 10 is curved.

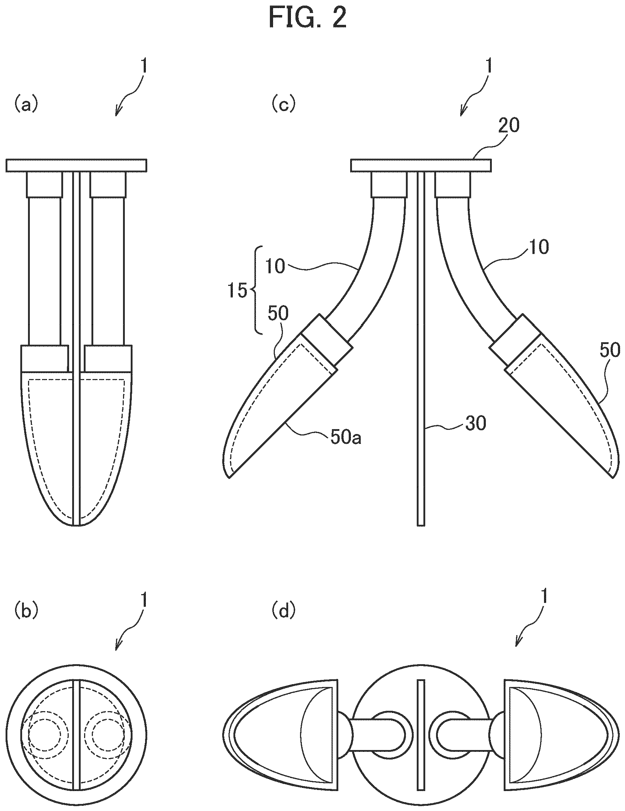

FIGS. 2 (a) to 2 (d) are side views and bottom views of the grasping device 1. Specifically, FIGS. 2 (a) and 2 (b) show a side view and a bottom view of the grasping device 1 (when the fluid pressure actuator 10 is non-curved (non-contracted)), respectively. FIGS. 2 (c) and 2 (d) show a side view and a bottom view of the grasping device 1 (when the fluid pressure actuator 10 is curved (contracted)), respectively.

The grasping device 1 uses a plurality of fluid pressure actuators 10 (soft actuators that can be curved and have flexibility) that curve (curl) during contraction. The grasping device 1 can grasp an object (which may be called a workpiece) using a plurality of fluid pressure actuators 10. The grasping device 1 may be used as a robot hand or the like.

The grasping device 1 includes a shovel unit 15, a mounting base 20 and a partition plate 30. The shovel unit 15 is configured by a fluid pressure actuator 10 and a housing portion 50.

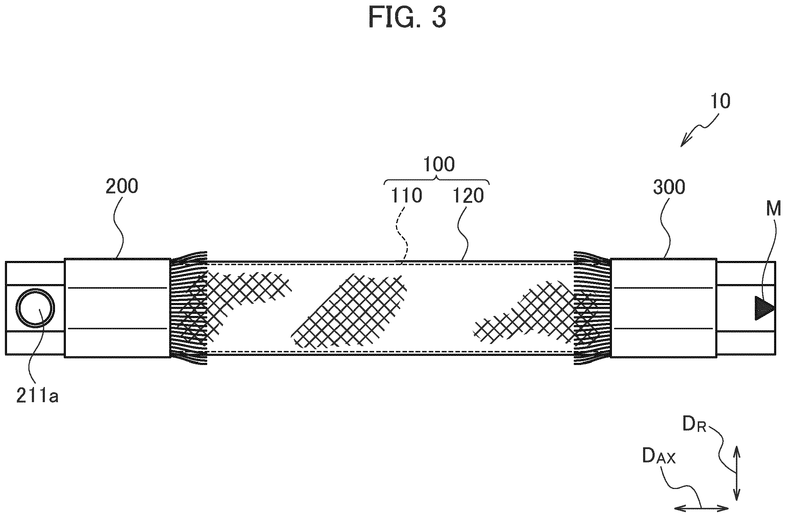

The fluid pressure actuator 10 is mounted on the mounting base 20. Specifically, the proximal end portion 200 (Not shown in FIGS 1 and 2, see FIG 3) of the fluid pressure actuator 10 is mounted on the mounting base 20.

A tip portion 300 (see FIG. 3) of the fluid pressure actuator 10 is provided with the spoon-shaped housing portion 50. The housing portion 50 is concave to hold the scooped object by operating (contracting and expanding) the fluid pressure actuator 10. The shovel unit 15 including the housing portion 50 may be referred to in other similar terms such as cup, bucket, etc.

The partition plate 30 is provided to partition the plurality of shovel units 15. Specifically, the partition plate 30 has a flat plate shape and is provided between the two shovel units 15. That is, the fluid pressure actuator 10 (shovel unit 15) may be provided on both sides of the partition plate 30.

The partition plate 30 is provided so as to close an opening surface 50a of the housing portion 50 when the fluid pressure actuator 10 is non-curved (non-contracted).

### (2) Schematic configuration of the fluid pressure actuator

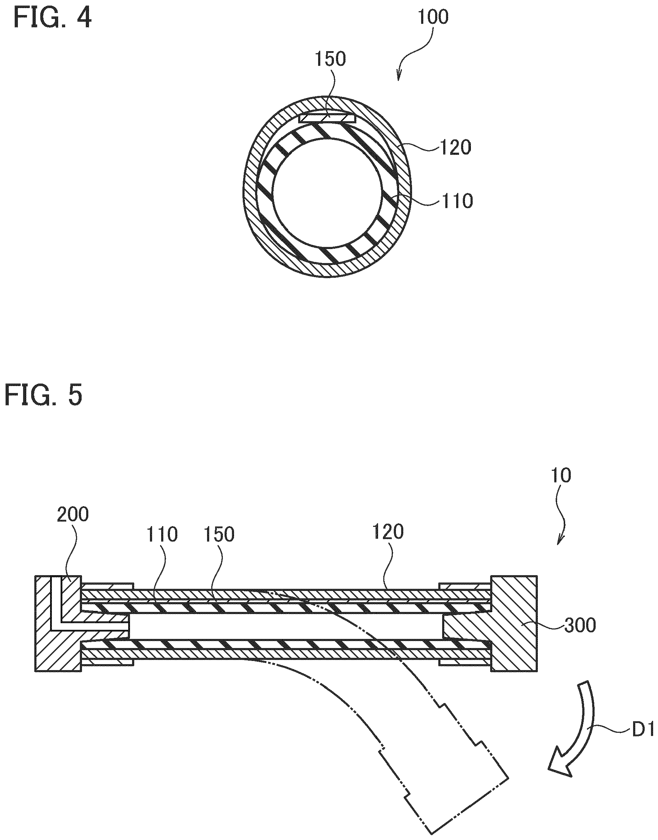

FIG. 3 is a side view of the fluid pressure actuator 10 according to the present embodiment. FIG. 4 is a cross-sectional view of the actuator body portion 100 along the radial direction D_{R}.

The fluid pressure actuator 10 has the actuator body portion 100, the proximal end portion 200 and the tip portion 300.

The actuator body portion 100 is composed of a tube 110 and a sleeve 120. Fluid flows into the actuator body portion 100 through a connection port 211a.

As a basic characteristic, the actuator body portion 100 contracts in the axial direction D_{AX} of the actuator body portion 100 and expands in the radial direction D_{R} due to fluid flow into the tube 110. The actuator body portion 100 expands in the axial direction D_{AX} of the actuator body portion 100 and contracts in the radial direction D_{R} due to fluid flow out of the tube 110. Due to the shape change of the actuator body portion 100, the fluid pressure actuator 10 functions as an actuator.

In the present embodiment, while using a McKibben type fluid pressure actuator having such basic characteristics, by providing a (may be referred to as regulating or restricting) restricting member 150 (Not shown in FIG. 3, see FIGS. 4, 5, etc.) that restricts compression of the axial direction D_{AX}, it can be curved (curled) in an orthogonal direction orthogonal to the axial direction D_{AX}, that is, in the radial direction D_{R}.

The fluid used to drive the fluid pressure actuator 10 may be either a gas such as air or a liquid such as water or mineral oil, but in particular, the fluid pressure actuator 10 may have high durability that can withstand hydraulic drive with high pressure applied to the actuator body portion 100.

The connection port 211a is attached to a drive pressure source for the fluid pressure actuator 10, specifically a hose (pipeline) connected to a gas or liquid compressor. The fluid that flows through the connection port 211a flows through the passage hole (not shown) into the actuator body portion 100, specifically into the tube 110.

The tube 110 is a cylindrical body that expands and contracts under fluid pressure. The tube 110 is made of an elastic material such as butyl rubber to repeatedly contract and expand under fluid pressure. When the fluid pressure actuator 10 is hydraulically driven, it is preferable that it be at least one type selected from the group consisting of NBR (nitrile rubber), chloroprene rubber, and epichlorohydrin rubber having high oil resistance.

The sleeve 120 is cylindrical and covers the outer peripheral surface of the tube 110. The sleeve 120 is a stretchable structure in which fiber cords oriented in a predetermined direction are woven, and a rhombic shape is repeated by crossing the oriented cords. By having such a shape, the sleeve 120 deforms pantographically and follows the tube 110 while restricting its contraction and expansion.

As a cord constituting the sleeve 120, a fiber cord of an aromatic polyamide (aramid fiber) or polyethylene terephthalate (PET) is preferably used. However, it is not limited to this kind of fiber cord, but may be a cord of a high-strength fiber such as a PBO fiber (polyparaphenylene benzobisoxazole), for example.

In this embodiment, the restricting member 150 is provided between the tube 110 and the sleeve 120.

The restricting member 150 is not compressed in the axial direction D_{AX}, and can be deformed only along the radial direction D_{R} (which may be called the deflection direction). That is, the restricting member 150 resists compression along the axial direction D_{AX} and is deformable in an orthogonal direction (radial direction D_{R}) orthogonal to the axial direction D_{AX}.

In other words, the restricting member 150 has a characteristic that is difficult to deform along the axial direction D_{AX} and deflects along the radial direction D_{R}. Deformable may be alternatively referred to as curving or curling.

The restricting member 150 also has a function of restricting (restraining) the expansion of the tube 110 (and the sleeve 120) to the radial direction D_{R} outside at a position on the outer periphery of the tube 110 where the restricting member 150 is provided.

In this embodiment, the restricting member 150 is provided from one end side to the other end side of the axial direction D_{AX} in the space of inside of the sleeve 120, specifically, the radial inside of the sleeve 120. In this embodiment, the restricting member 150 is formed by using a leaf spring.

The size of the leaf spring may be selected according to the size of the fluid pressure actuator 10, the required generating force, etc., and is not particularly limited. The material of the leaf spring is also not particularly limited, but typically it may be a material that is easy to curve and resistant to compression, such as a metal such as stainless steel. For example, the restricting member 150 may be formed of a thin sheet of carbon fiber reinforced plastic (CFRP) or the like. Since the CFRP is less likely to undergo plastic deformation than a metal, it is easy for the fluid pressure actuator 10 to return to its original straight state after curving.

The proximal end portion 200 is located on the base portion 20 side. The connection port 211a described above is formed on the proximal end portion 200. The proximal end portion 200 may include a mechanism for sealing one end portion of the axial direction D_{AX} of the actuator body portion 100.

The tip portion 300 is located on the opposite side of the proximal end portion 200 on the base portion 20 side. The tip portion 300 may be provided with a mechanism for sealing the other end portion of the axial direction D_{AX} of the actuator body portion 100.

The sealing mechanism of the actuator body portion 100 provided in the proximal end portion 200 and the tip portion 300 may be similar to, for example, the fluid pressure actuator disclosed in Japanese Patent Laid-Open Publication No. 2021-088999.

### (3) Behavior of the fluid pressure actuator 10

FIG. 5 is an explanatory view of the behavior of the fluid pressure actuator 10. The fluid pressure actuator 10 shown in FIG. 5 is fixed to the proximal end portion 200 side, and the tip portion 300 side is freely movable. That is, the proximal end portion 200 side is a fixed end, and the tip portion 300 side is a free end.

As described above, when the fluid flows into the fluid pressure actuator 10, it attempts to contract in the axial direction D_{AX}, but since the restricting member 150 is provided, the contraction along the axial direction D_{AX} is restricted (constrained).

That is, the restricting member 150 formed by a rigid member such as a leaf spring serves as a backbone, and expands in the radial direction D_{R} outside on the opposite side (lower side in FIG. 5) to the position on the outer periphery of the tube 110 and sleeve 120 where the restricting member 150 is provided, thereby shortening the dimension of the fluid pressure actuator 10 in the axial direction D_{AX} and deflecting the fluid pressure actuator 10 (Specifically, the actuator body portion 100) along the direction D1. Note that the direction D1 may be called a flexible direction. In order to make it easy to recognize that the fluid pressure actuator 10 is bent in the direction D1, a mark M (see FIG. 3) may be provided to indicate the position where the restricting member 150 is provided.

The restricting member 150 is provided between the rubber made tube 110 and the sleeve 120, resists compression in the axial direction D_{AX}, is deformable along the orthogonal direction (radial direction D_{R}) orthogonal to, and is arranged in a part in the circumferential direction of the actuator body portion 100.

That is, when the actuator body portion 100 (McKibben) attempts to contract along the axial direction D_{AX} due to the inflow (pressurization) of fluid into the actuator body portion 100, the portion of the restricting member 150 has high compressive rigidity, and therefore, the portion where the restricting member 150 is arranged cannot contract. On the other hand, since the portion of the other actuator body portion 100 attempts to contract, a force in the curving direction along the orthogonal direction (radial direction D_{R}) is generated, and the portion is curved with the restricting member 150 as the back face.

### (4) Operation of the grasping device 1

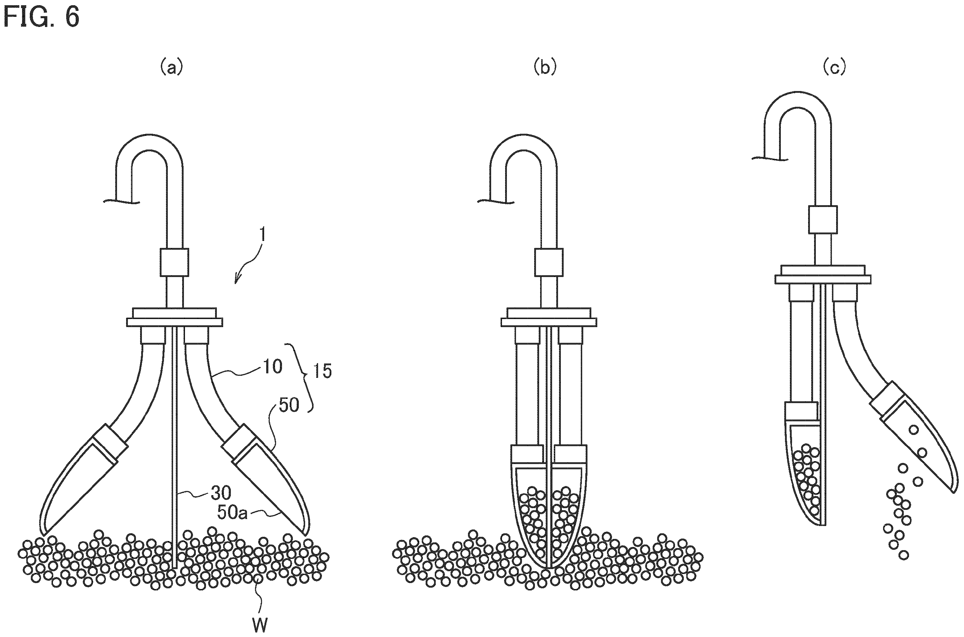

FIGS. 6 (a), (b) and 6 (c) show an example of operation of the grasping device 1. Specifically, FIGS. 6 (a), (b) and 6 (c) show an example of operation in which the grasping device 1 scoops up a granular object W. As shown in FIGS. 6 (a), (b) and 6 (c), the grasping device 1 functions as a robotic hand and may be movably supported by a support portion.

As shown in FIG. 6 (a), a space is formed between the partition plate 30 and the housing portion 50 (Specifically, the opening surface 50a) by contracting and curving the fluid pressure actuator 10. In such a state that the shovel unit 15 is opened, the grasping device 1 is moved to a desired position so that the object W can be scooped. The movement of the grasping device 1 may be performed manually or by a mechanical method.

As shown in FIG. 6 (b), when the fluid pressure actuator 10 is placed in a non-contracting state, the fluid pressure actuator 10 returns from a curved state to a straight state, the space between the partition plate 30 and the housing portion 50 (opening surface 50a) disappears, and the object W is held in the housing portion 50.

As shown in FIG. 6 (c), when the space is formed between the partition plate 30 and the housing portion 50 by moving the grasping device 1 to another desired position and contracting and curving the fluid pressure actuator 10 again, the object W held in the housing 50 falls.

Although the object W is not particularly limited, for example, the grasping device 1 can be suitably used for serving various foodstuffs included in a lunch box.

### (5) Modified example

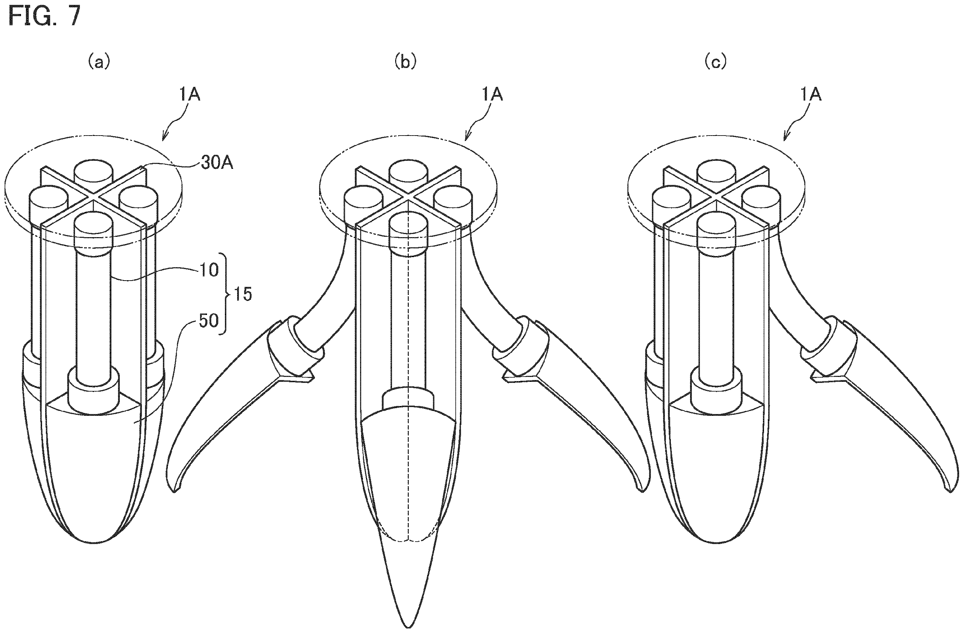

Next, modified example of the grasping device 1 will be described. FIGS. 7 (a), (b) and (c) are perspective views of the grasping device 1A related to modified example. Specifically, FIG. 7 (a) is a perspective view of the grasping device 1A when the fluid pressure actuator 10 is not contracted. FIG. 7 (b) is a perspective view of the grasping device 1A when the fluid pressure actuator 10 is contracted. FIG. 7 (c) is a perspective view of the grasping device 1A when a part of the fluid pressure actuator 10 is contracted.

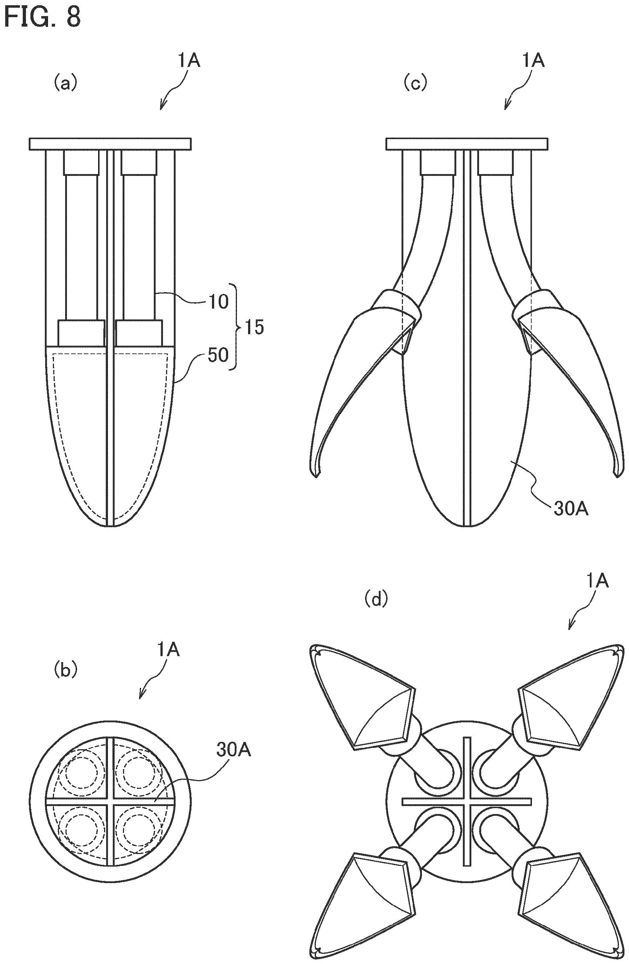

FIGS. 8 (a) to (d) are side views and bottom views of the grasping device 1A. Specifically, FIGS. 8 (a) and 8 (b) show a side view and a bottom view of the grasping device 1A (when the fluid pressure actuator 10 is not contracted), respectively. FIGS. 8 (c) and 8 (d) show a side view and a bottom view of the grasping device 1A (when the fluid pressure actuator 10 is contracted), respectively.

In the grasping device 1A, the partition plate 30 A has a cross shape in the bottom view of the grasping device 1A. Four shovel units 15 composed of a fluid pressure actuator 10 and a housing portion 50 are provided.

The fluid pressure actuator 10 (shovel unit 15) is provided in each of four spaces partitioned by a partition plate 30 A. Note that the partition plate may not have a cross shape, but may form a plurality of spaces (For example, three or five), and the fluid pressure actuator 10 may be provided in each of the plurality of spaces partitioned by the partition plate.

Each of the fluid pressure actuators 10 can operate (contract and expand) individually. Therefore, the grasping device 1A can handle a larger amount of the object W of a predetermined unit amount in one operation cycle (from scooping to releasing the object W) compared with the grasping device 1. Specifically, the grasping device 1 can handle two units of the object W because it has two shovel units 15, while the grasping device 1A can handle four units of the object W because it has four shovel units 15.

### (6) Function and effects

According to the above-described embodiment, the following action effects can be obtained. For example, according to the grasping device 1, the tip portion 300 of the fluid pressure actuator 10 is provided with the spoon-shaped housing portion 50, and the partition plate 30 for closing the opening surface 50a of the housing portion 50 when the fluid pressure actuator 10 is non-curved (non-contracted).

Therefore, the scooped object W does not spill out, and the object W to be determined is generally held in the housing portion 50. That is, the shovel unit 15 can more reliably grasp (hold) an appropriate amount of the object W at a time.

That is, the grasping device 1 (and the grasping device 1A) can grasp (hold) an appropriate amount of the object at each time while using a fluid pressure actuator that curves (curls) during contraction.

The fluid pressure actuator 10 (shovel unit 15) may be provided on both sides of the partition plate 30. Therefore, in one operation cycle (from the scooping up to the releasing the object W), a predetermined unit amount of the object W can be handled more.

In addition, in the grasping device 1A, the partition plate 30 A has a cross shape in the bottom view of the grasping device 1A, and four shovel units 15 are provided. Therefore, a predetermined unit amount of the object W can be handled more in one operation cycle (from scooping to releasing the object W).

### (7) Other Embodiments

Although the embodiments have been described above, they are not limited to the description of the embodiments, and it is obvious to those skilled in the art that various modifications and improvements can be made.

For example, an additional partition plate may be provided on the upper surface side of the housing portion 50 to make the amount of the object W held by the housing portion 50 more accurate. In the above-described embodiment, the partition plate 30 may be provided to close the opening surface 50a of the housing portion 50 when the fluid pressure actuator 10 is non-curved (non-contracted), but may close the opening surface 50a of the housing portion 50 when the fluid pressure actuator 10 is curved.

In the grasping device 1 and the grasping device 1A, a plurality of shovel units 15 are provided, but the shovel unit 15 may be one.

In the above-described embodiment, the flexibility of the fluid pressure actuator is ensured using the restricting member 150, but the flexibility of the fluid pressure actuator may be ensured by another structure. For example, by providing a flexible frame material having a part of a bellows shape around the fluid pressure actuator, when the fluid pressure actuator contracts, the fluid pressure actuator is curved such that the bellows portion faces toward an inside.

Although the present disclosure has been described in detail above, it is clear to those skilled in the art that the present disclosure is not limited to the embodiments described herein. The present disclosure may be implemented in a modified and modified manner without departing from the object and scope of the present disclosure as determined by the description of the scope of claims. Accordingly, the description of the present disclosure is for illustrative purposes and does not have any restrictive meaning to the present disclosure.

### [Reference Signs List]

1, 1A Grasping device
10 Fluid pressure actuator
15 Shovel unit
20 Mounting base
30, 30 A Partition plate
50 Housing portion
50a Opening surface
100 Actuator body portion
110 Tube
120 Sleeve
150 Restricting member
200 Proximal end portion
211a Connection Port
300 Tip portion
W Object

## Claims

1. A grasping device using a plurality of fluid pressure actuators that are curved during contraction, wherein
the fluid pressure actuators are a flexible soft actuator,
A spoon-shaped housing portion is provided at a tip portion of each of the fluid pressure actuators, and
a partition plate is provided to close an opening surface of the housing portion when the fluid pressure actuator is non-curved or curved.

2. The grasping device according to claim 1, wherein
the fluid pressure actuators comprise:
a tube that is cylindrical, and expands and contracts under fluid pressure; and
a sleeve having a stretchable structure in which fiber cords oriented in a predetermined direction are woven and that covers an outer peripheral surface of the tube.

3. The grasping device according to claim 1 or 2, wherein the fluid pressure actuator is provided on both sides of the partition plate.

4. The grasping device according to claim 1 or 2, wherein
the partition plate forms a plurality of spaces, and
the fluid pressure actuators are provided respectively in the plurality of spaces partitioned by the partition plate.

5. The grasping device according to claim 2, wherein the fluid pressure actuators comprise a restricting member provided inside in the sleeve from one end to another end in the axial direction of the tube.
